# EUROPEAN PATENT SPECIFICATION

(11) **EP 2 056 559 B1**
(45) Date of publication and mention of the grant of the patent: **17.05.2017**
(21) Application number: 07021410.1
(22) Date of filing: 02.11.2007
(51) Int. Cl.: H04L 29/06, G06F 21/00

(54) **Method and system for network simulation**
Verfahren und System zur Netzwerksimulation
Système et procédé de simulation de réseau

(43) Date of publication of application: 06.05.2009
(73) Proprietor: Deutsche Telekom AG, 53113 Bonn (DE)
(72) Inventor: Schmidt, Stephan, 13189 Berlin (DE); Bye, Rainer, 10247 Berlin (DE); Luther, Katja, 13189 Berlin (DE); Müller, Achim, 10319 Berlin (DE); Alpcan, Tansu, 10625 Berlin (DE); Albayrak, Sahin, 14195 Berlin (DE)
(74) Representative: Blumbach Zinngrebe

(56) References cited:
- WO-A-2004/031953
- US-A1- 2003 182 582
- US-A1- 2006 109 793
- LUTHER K ET AL: "A Cooperative AIS Framework for Intrusion Detection" COMMUNICATIONS, 2007. ICC '07. IEEE INTERNATIONAL CONFERENCE ON, IEEE, PI, June 2007 (2007-06), pages 1409-1416, XP031125870 ISBN: 1-4244-0353-7
- HONGMEI DENG ET AL: "Agent-Based Cooperative Anomaly Detection for Wireless Ad Hoc Networks" PARALLEL AND DISTRIBUTED SYSTEMS, 2006. ICPADS 2006. 12TH INTERNATIONAL CONFERENCE ON MINNEAPOLIS, MN, USA 12-15 JULY 2006, PISCATAWAY, NJ, USA,IEEE, 12 July 2006 (2006-07-12), pages 613-620, XP010928376 ISBN: 0-7695-2612-8

## Description

### Field of the invention

The invention relates to communication networks in general, and especially to a method, a system and a digital storage medium with electronically readable control instructions stored thereon for simulating data communication in a computer network, in particular an IP-based computer network.

### Background of the invention

In contemporary communication infrastructures, IP-based computer networks play a prominent role. The deployment of these networks is progressing at an exponential rate as different kinds of participants such as corporations, public authorities and individuals, rely on sophisticated and complex services and communication systems. With regard to information security, this leads to new challenges as large amounts of data, which may hold malicious content such as worms, viruses, or trojans, are transferred over open networks.

Network security measures dealing with these threats can be implemented in the network itself as well as at hosts connected to access routers of the network. The host-based approach has its merits, especially with respect to the scalability of a resulting security framework. However, placing security capabilities such as firewalls or virus scanners on individual hosts does not inhibit the traffic traveling through the network. Furthermore, since the hosts are generally not under the control of network operators, there is no way of ensuring a certain network-wide security policy. A consequence for network service providers (NSPs) striving to offer improved security features to their customers as a value-adding feature is to devise a security framework in which detection devices are placed within the network.

For examining performance issues encountered in large-scale network architectures it is known to use network simulation tools, wherein the most popular software tool in the research community is the open-source network simulator ns-2, described for instance in "The ns Manual" by K. Fall and K. Varadhan (http://www.isi.edu/nsnam/ns). An alternative simulation tool is the commercial OPNET software, described in "Network simulations with opnet" by X. Chang, in WSC '99: Proceedings of the 31st conference on Winter simulation, New York, NY, USA, ACM Press, 1999, pages 307-314. From US 6 442 141 B1 also a test system and method is known for providing a network simulator to simulate the packet delivery delay and loss dynamics of a network such as the Internet. The described methods and systems for network simulation, however, are not suitable for designing a security framework for a network. In "A Cooperative AIS Framework for Intrusion Detection", IEEE International Conference on Communications, June 2007, pages 1409-1416, by Luther K. et al. a cooperative AIS (artificial immune system) framework for intrusion detection is described, wherein AIS agents use a set of detectors obtained through negative selection during a training phase. The approach is illustrated by means of specific example scenarios in a network security simulator, wherein some of the clients run an AIS agent.

It is an object of the present invention to show a new and improved way for simulating anomalous behavior within a communication network, in particular within a computer network. A further object of the invention is to provide an improved and/or specialized method and system for network simulation. Still a further object of the invention is to show a new and improved way to test features of a security architecture of detection devices which are placed within a network.

### Summary of the Invention

The inventive solution of the object is achieved by each of the subject matter of the respective attached independent claims. Advantageous and/or preferred embodiments or refinements are the subject matter of the respective attached dependent claims.

Accordingly, an inventive method for simulating anomalous operation within a computer network with multiple network elements which for the purpose of data communication are interconnected, comprises the step of providing for each of said network elements a corresponding data processing node for representing the respective network element, wherein said data processing nodes are adapted to exchange data with each other, wherein at least a subset of said data processing nodes generates data traffic, and wherein the data traffic generated by at least one of said data processing nodes is anomalous data traffic.

The inventive method preferably relates to IP-based computer networks, in particular connected to the Internet, which are subject to malware attacks, utilizing for instance viruses, worms or trojans, or to denial-of-service (DoS) or distributed denial-of-service (DDoS) attacks. However, the inventive method is generally applicable to any computer network comprising multiple devices which are capable of manipulating data according to a list of instructions and which are interconnected for the purpose of exchanging data. Therefore, a computer network for instance comprising wireless communication devices, such as PDAs or smartphones or any other network of data processing devices also lies within the scope of the invention.

Data traffic typically comprises the transmission of a data packet or at least header data of a data packet from a first data processing node to a second data processing node directly or via a number of third data processing nodes, wherein the route along said third data processing nodes is determined in dependence of a pre-defined routing protocol. The route depends on the interconnections of the network elements represented by the respective data processing nodes and on the selection of the routing protocol.

Since the method is preferably adapted for simulating anomalous operation within an IP-based computer network, the data processing nodes preferably exchange data based on the TCP/IP protocol. That way a realistic simulation of Internet communication, which is based on the TCP/IP reference model, can be achieved. For this purpose the data processing nodes preferably are provided with selected layers of the TCP/IP protocol stack. For practical purposes different types of data processing nodes are provided representing different network elements , wherein different types of data processing nodes can be provided with different layers of the TCP/IP protocol stack, as for instance network, transport and/or application layer.

The data processing nodes preferably generate data traffic automatically. For this purpose a data processing node with advantage is provided with a pre-defined profile based on which data traffic is automatically generated. Such profile for instance comprises a schedule for the transmission of pre-defined types of data packets such as UDP packets or HTTP requests, wherein also pre-defined times for transmission are defined. The data exchange between the data processing nodes most preferably is based on a discrete event model providing a common timer for all data processing nodes. Accordingly said profiles preferably comprise information on pre-defined times for transmission of pre-defined data packets based on said common timer.

By at least one data processing node anomalous data traffic is generated. For this purpose preferably pre-defined parameters are provided defining data traffic corresponding to a normal network operation, wherein anomalous data traffic is any data traffic which deviates from said pre-defined parameters. Most preferably the respective data processing node is provided with a special attack profile, wherein anomalous data traffic is generated automatically by the respective data processing node according to a pre-defined attack pattern of a selectable type of malware.

The method most advantageously can be utilized for testing security architectures of detection devices which are placed within a network. Therefore the method further comprises the step of analyzing data traffic by at least one detection unit for detecting anomalous data traffic, wherein each of said detection units receives information on data traffic by at least one associated data processing node via a data interface, in particular a socket-based interface, Detection unit is used herein as an abstract term for a unit comprising any algorithm, application or tool employed for the purpose of malware detection.

With special advantage the method can be utilized for testing security architectures which are based on a distributed intrusion detection framework. Accordingly, in a preferred embodiment of the method multiple detection units are provided, each of which is associated with a different one of the data processing nodes. Thereby a distributed architecture of detection devices can be simulated. For simulating security architectures which are based on a cooperative approach, said multiple detection units preferably exchange data with each other.

In order to compare different security architectures for testing purposes, preferably respective different setups of detection units are provided. For consecutively testing said different setups of detection units, a data session comprising the data traffic generated by all data processing nodes during a pre-defined time interval is stored in at least one database. The stored data session is then repeated for each of said setups of detection units.

The data traffic typically comprises data packets with header data and payload data. For improving the simulation performance only the header data is exchanged between data processing nodes, while the payload data is stored in at least one database, wherein for analyzing purposes the stored payload data is accessed by the detection units.

The inventors found that for performing the described method with special advantage an agent-based framework can be utilized, wherein the data processing nodes are provided as agents and wherein the method comprises executing an agent-based application on at least one computer. An agent-based application is a distributed application, which during run-time utilizes agents for providing its functionality. An agent is a virtual entity, such as for instance a program, a process or a thread, which independently, i.e, without direct control and monitoring, accomplishes a pre-defined task or achieves a pre-defined objective. An agent is adapted to perform steps for autonomously accomplishing a pre-defined task and/or achieving a pre-defined objective and to coordinate said steps. An agent is adapted to communicate with other agents, in order to provide services or to cooperate with other agents for accomplishing his task. An agent is provided with information on his tasks and/or objectives and on his surroundings. Since the described method advantageously can be implemented by means of a software, the data processing nodes most preferably are provided as software agents.

Simulating large and/or complex networks using the described software agents may require extensive processing capacity. Since the costs of a computer increase disproportionately with its processing capacity, for simulating large and/or complex networks preferably several computers are utilized, thereby reducing the required processing capacity per computer. In this embodiment at least two data processing nodes are located on different computers which are connected via a communication network.

An inventive system for simulating anomalous operation within a computer network with multiple network elements which for the purpose of data communication are interconnected, comprises for each of said network elements a corresponding data processing node representing the respective network element, wherein said data processing nodes are adapted to exchange data with each other, at least a subset of said data processing nodes is adapted to generate data traffic, and at least one of said data processing nodes is adapted to generate anomalous data traffic.

Preferably the data processing nodes are adapted to generate data traffic which comprises data transmitted between data processing nodes based on the TCP/IP protocol. For automatically generating data traffic each of said subset of data processing nodes is provided with a pre-defined profile for generating data traffic, wherein the at least one data processing node adapted to generate anomalous data traffic is adapted to generate data traffic according to a pre-defined attack pattern of a selectable type of malware, wherein the malware can for instance be selected from known viruses, worms or trojans, or the attack pattern is selected to be that of a DoS or DDoS attack.

For testing security architectures preferably at least one of the data processing nodes is provided with a data interface for exchanging data with an associated detection unit, wherein said detection unit is adapted to detect anomalous data traffic by analyzing information on data traffic received from the associated data processing node. Most preferably the system comprises multiple detection units, each of which is associated with a different one of the data processing nodes, wherein with advantage said multiple detection units are adapted to exchange data with each other.

Due to the above described issue of processing capacity the system advantageously comprises at least two computers interconnected via a communication network, in particular a LAN, wherein at least two data processing nodes are located on different computers.

The system further with advantage comprises at least one database for storing data sessions, wherein a data session comprises the data traffic generated by all data processing nodes during a pre-defined time interval, so that stored data sessions can be repeated for different setups of detection units. If the system comprises several interconnected computers, preferably in each of the computers a database is provided, wherein data traffic generated by the data processing nodes is stored in the database of the computer, in which the data processing node is located. The database structure preferably is further utilized for increasing the simulation performance, wherein for this purpose payload data of data packets is stored in the database or databases, accessible by the detection units for analyzing purposes and the data processing nodes are adapted to exchange only the header data of data packets.

As described above, the data processing nodes preferably are provided as software agents. Accordingly, also a digital storage medium lies within the scope of the invention, which comprises electronically readable control instructions adapted to perform, when executed in at least one computer, a method as described above.

### Brief Description of the Figures

It is shown in
- Fig. 1: a schematic view of an exemplary computer network comprising interconnected network elements, such as clients, server and routers,
- Fig. 2: a schematic view of a preferred embodiment of an inventive system, comprising several data processing nodes respectively representing the network elements shown in Fig. 1 and adapted to perform the inventive method for simulating anomalous operation within a computer network as shown in Fig. 1, and
- Fig. 3: a schematic view of a preferred embodiment of an inventive system, comprising several computers, which is adapted for simulating a complex computer network.

### Detailed Description of the Invention

Subsequently, preferred but exemplar embodiments of the invention are described in more detail with regard to the figures.

The following description focuses on various aspects of a preferred embodiment of the invention, wherein the inventive method is performed by an inventive system comprising a software application or software tool.

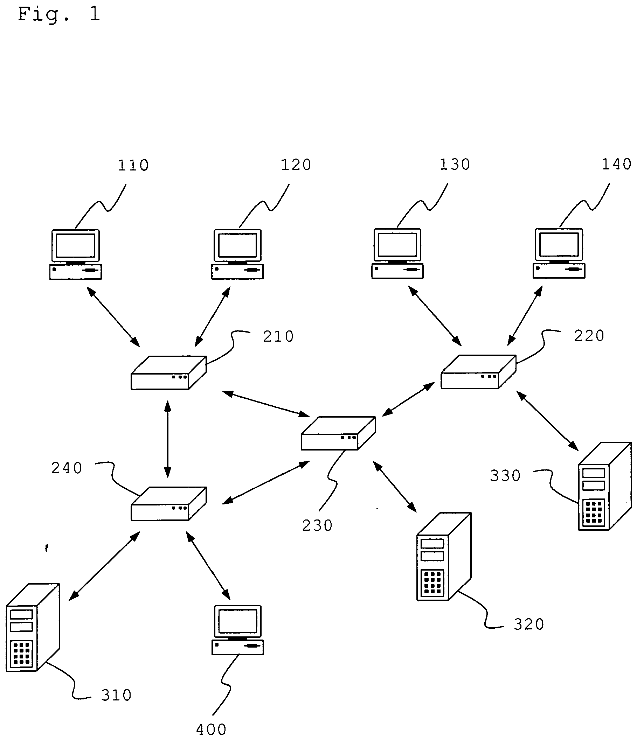

Fig. 1 shows an example of a computer network which can be simulated with an inventive method. The network comprises several network elements, such as client hosts 110, 120, 130 and 140, access routers 210, 220, 230 and 240, and servers 310, 320 and 330. These network elements for instance can be located on the premises of a company forming part of the company-wide LAN (Local area network). In the shown embodiment the LAN is connected to the Internet, thereby also providing access to attacking client 400.

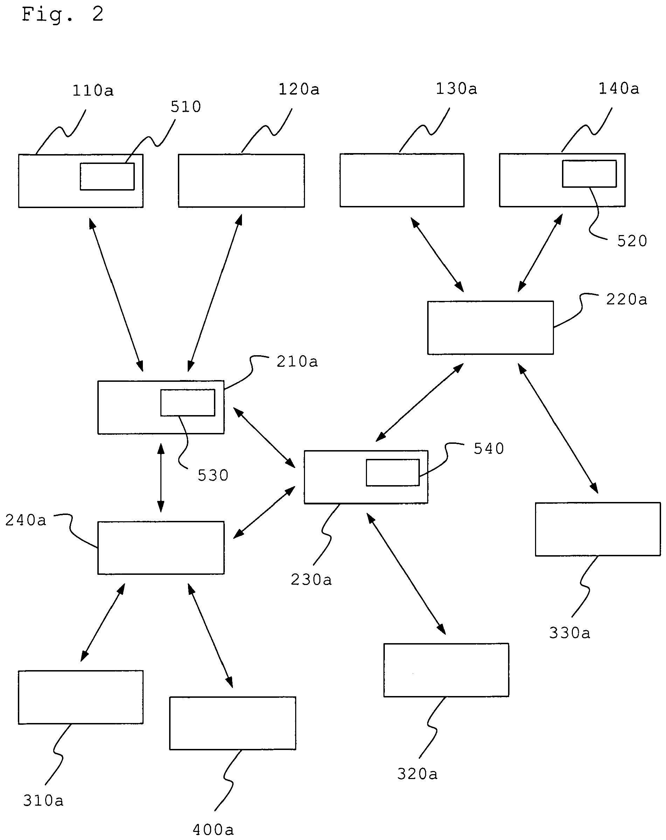

In Fig. 2 a schematic view of a preferred embodiment of an inventive system is depicted, comprising data processing nodes which correspond to the network elements shown in Fig. 1. Accordingly, client hosts 110, 120, 130 and 140 are respectively represented by data processing nodes 110a, 120a, 130a and 140a,access routers 210, 220, 230 and 240 are respectively represented by data processing nodes 210a, 220a, 230a and 240a, and servers 310, 320 and 330 are respectively represented by data processing nodes 310a, 320a and 330a. The attacking device 400 is represented by data processing node 400a. In the described embodiment the data processing nodes are provided as software agents.

It is further shown in Fig. 2 an exemplary setup of detection units 510, 520, 530 and 540 which form an exemplary security architecture. In the shown setup the detection units 510, 520, 530 and 540 are respectively connected to the data processing nodes 110a, 140a, 210a and 230a. For this purpose the data processing nodes 110a, 140a, 210a and 230a are provided with a socket-based interface.

The inventive method preferably performs network simulation using a discrete event model. This approach has several advantages regarding application performance and scalability. Discrete simulation allows very cost-efficient exploration and experimentation with real-life network topologies and architectures.

By the invention a network simulation tool is provided which is specifically tailored to meet the needs of security experts and network administrators. This target group is enabled to test and evaluate the performance of commonly available security solutions as well as new research approaches. This is accomplished by focusing on the correct reproduction of the TCP/IP protocol stack on a traffic simulation level. On top of the TCP layer, also easy integration of application-level APIs is achieved by providing a standardized socket interface. In particular, special common attack scenarios are supported and can be simulated, for example botnet-based DDoS attacks, with DDoS attacks being one of the most important contemporary network threats. In addition, customized profiles expressing the node behavior can be applied within the simulation.

Utilizing a discrete event model with advantage allows the examination and simulation of large-scale networks. In the following it is referred to an discrete atomic simulation step as a tick. The described embodiment of an inventive system can be run as a distributed system to scale better with network size and amount of traffic.

The invention provides an evaluation framework with the objective of extending conventional network simulation tool features supporting detailed examination and testing of security-related network algorithms, detection units and frameworks. The main focus is to provide a realistic packet-level simulation environment as a testbed for the development of new detection units as well as existing ones. The invention thus provides the ability to determine the efficiency of security frameworks consisting of a set of detection units in detecting and eliminating various types of malware such as viruses, worms, and trojans as they are traversing the network before reaching their designated target.

In a preferred embodiment the system is built upon the JIAC framework, described in "Agent-based telematic services and telecom applications" by Fricke, S., Bsufka, K., Keiser, J., Schmidt, T., Sesseler, R., Albayrak, S., in Communications of the ACM 44(4), April 2001, pages 43-48. JIAC is a service-centric middleware architecture based on the agent paradigm. Within the described embodiment of the inventive system agents are used for modeling and implementing the network entities such as routers, clients, and servers, wherein the underlying JIAC agent framework provides a rich and flexible basis for implementing and testing of various security deployments and algorithms.

Building upon an agent framework furthermore allows combining the partial knowledge of the agents residing in the network in a cooperative approach for identifying and eventually eliminating IP-based threats. For example, this may be achieved by monitoring the structure of the encountered IP traffic and the behavior of potentially compromised target systems. Accordingly, the described system with special advantage is also adapted to test distributed cooperative security architectures.

Although software agents provide powerful application-level capabilities, their complexity also affects the scalability of the simulation. Therefore, for simulating large-scale networks the invention provides for a distributed simulation, allowing the subdivision of tasks to different computers and processes in a parallel-execution model. Preferably, in the distributed simulation context agents are employed as managing entities of different parts of the simulated network domain.

At the foundation of the method are standard network simulation features such as network and traffic generation. The system preferably comprises a network editor (not shown), wherein network topologies can be created by selecting network elements such as routers and different kinds of end devices such as for instance web clients, mail servers or the like and adding them to a network editor tab via drag-and-drop. For each selected network element, a corresponding data processing node in the form of an agent is created, set up and started in a separated thread.

The network preferably is hierarchically structured by dividing it into subnets. For example, a large-scale network usually consists of a core area, a number of distribution networks, for instance representing university or metropolitan area networks, and access networks, for instance representing company networks. In a preferred embodiment the data processing nodes, which represent the network to be simulated, are generated automatically by specifying various parameters such as the number of individual subnets and their types, node degree, topology (star, ring etc.), average link bandwidth in the core, distribution and access subnets. The subnets and their individual network elements such as routers and links and their properties, i.e. routing tables, network interfaces etc., preferably are modeled using the modeling framework EMF (http://www.eclipse.org/emf) which also allows automated source code generation. Consequently, the model can easily be extended to include new features or adapted to match new requirements. Supported standard device properties for instance are processing speed, packet queuing mechanisms and supported routing protocols, wherein link properties comprise delay and bandwidth.

The described system preferably is adapted to create and update routing tables of all data processing nodes which form a virtual network, wherein the nodes of said virtual network represent corresponding devices residing in the computer network to be simulated. The routing protocol to be used for this purpose can be selected by a user. With advantage static and dynamic protocols are utilized. A static routing protocol based on the Dijkstra algorithm centrally computes the shortest paths as the virtual network is loaded and each time the topology changes. The resulting routing tables are subsequently loaded onto the individual network nodes.

On the other hand, a dynamic routing protocol adopted from IS-IS (Intermediate-System-to-Intermediate-System) can advantageously be utilized which relies on a decentralized algorithm, wherein the data processing nodes which correspond to routers exchange information about their link states and gather topology information locally. In an iterative fashion, the routing tables at the individual nodes are updated through message exchange.

Traffic on the virtual network can be generated by different means, wherein traffic preferably is in the form of IP packets, comprising header and body. A straightforward way is to simply select a client, for instance one of the virtual clients 110a, 120a, 130a, 140a or 400a shown in Fig. 2, and request a web page to be transferred (web client), or an e-mail to be sent (mail client) from a specified server, for instance one of the virtual servers 310a, 320a or 330a. By implementing the TCP/IP protocol stack, preferably an application layer module is provided which is based on standard Java socket implementations. In this fashion, support of a variety of other applications can be provided.

With special advantage, the concept of node profiles is incorporated in the described system. Node profiles allow the customization of node behavior in order to automatically generate traffic. Thereby detailed behavior of virtual clients 110a, 120a, 130a, 140a or 400a for custom traffic generation can be configured and scheduled. According to a virtual system-wide timer, profile elements can be scheduled for one-time or repeated execution. Profile elements are elementary actions, like sending single UDP packets or issuing HTTP requests. Each action contains a time stamp as well as specific context information depending on the used protocol. For example, for a HTTP request the name of the web server and the requested URL are stored in the profile element. After the definition, a profile preferably can be attached to several clients 110a, 120a, 130a, 140a or 400a, for instance by a click in a context menu.

This concept allows to represent inherent system behavior or explicit user actions and results in the automatic generation of traffic. This also includes automated attack generation for the purpose of examining security-related network features. For attack generation preferably different user-selectable models are provided, as for instance worm spread or DDoS attack models

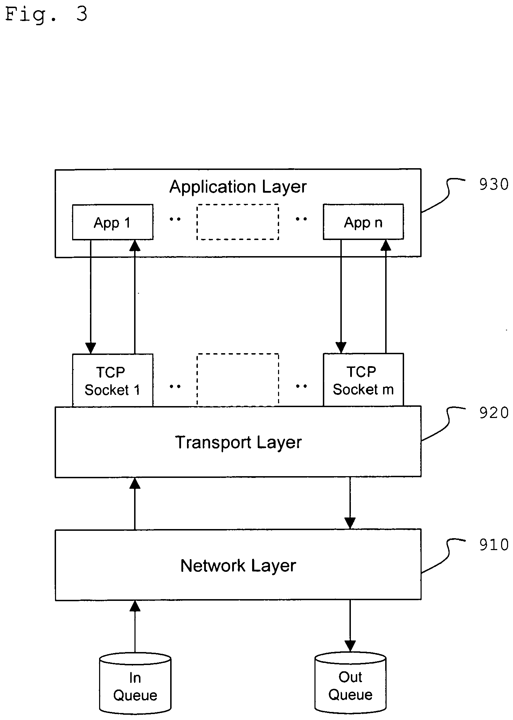

Since the TCP/IP reference model is the de facto standard for Internet communication, the described system provides an implementation for it. In Fig. 3 the implemented layers of the reference model preferably used in the simulation are shown. The virtual routers as well as the virtual end devices in the simulation contain a network layer 910. Virtual end devices, such as virtual clients or servers, also exclusively have a transport layer 920 and an application layer 930.

At the network layer 910, IPv4 is realized with the key features global addressing, routing and fragmentation support. Moreover, TCP/IP model implementation allows containing several protocols in each layer. Hence, also IPv6 support is preferably provided. For the fault management, TTL (Time to live) and header checksums are supported and the ICMP protocol is implemented for failure notification. Network Layer communication is realized directly on the drop-tail queues that are located at the network interfaces.

On the next level, the transport layer 920 is comprised of UDP and TCP. TCP offers a reliable and in-order delivery of data. Sockets represent the interface to the application layer, i.e., applications can set up several stream sockets as well as the corresponding server sockets. In this fashion, third-party Java libraries can easily be integrated in the simulation by the substitution of their sockets with sockets provided by the invention. The JavaMail API (http://java.sun.com/products/javamail) for instance has been successfully implemented by the inventors.

All applications that are run follow a common interface that abstracts from their specific behavior but allows a standardized way of executing them. Exemplary protocols comprise HTTP, SMTP and IRC protocols. Furthermore, the application layer offers an environment allowing the simultaneous execution of several application instances.

Generated traffic can also be exported to files in order to inspect the data with standard traffic inspection tools, wherein an example of a file format for storage is the "pcap" format (http://www.tcpdump.org), and an examplary inspection tool is "wireshark" (http://www.wireshark.org). Several tests have been conducted by the inventors with traffic exported from an inventive system, verifying that the generated traffic is well-formed. Wireshark is able to reconstruct the application data stream without errors if all corresponding IP packets are in the exported file. The generated traffic can be analyzed either offline, for example with the aforementioned tools, or online within the inventive system itself. For this purpose the system preferably comprises a graphical user interface which is adapted for displaying a graphical summary.

Simulations in large-scale networks are very costly in terms of processing time and memory consumption. Therefore, an inventive method preferably is performed as a distributed simulation, allowing the subdivision of tasks to different computers and processes. For this purpose utilized network models comprise several subnets that contain the respective end devices or routers.

The handling of subnets is distributed to several processes on different individual machines, allowing the simulation to scale better with increasing network size.

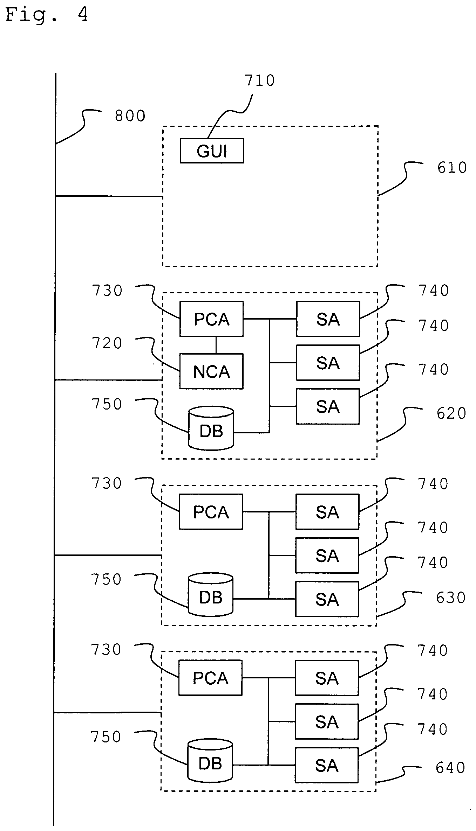

Fig. 4 shows the architecture of a distributed simulation. In the shown embodiment computers 610, 620, 630 and 640 are provided which are connected by means of a LAN 800. The data processing nodes 710, 720, 730, 740, provided as software agents, are distributed on different of the computers 610, 620, 630 and 640. For organizing a distributed simulation different types of agents are provided, wherein the simulation workload distribution on the agent level is described in more detail below.

A subnet agent (SA) 740 is responsible for managing an individual subnet, as for instance shown in Fig. 2. During execution, the SA receives events from the PCA 730 (see below) indicating that a new tick has started. It performs all relevant operations such as packet forwarding and application handling that need to be executed for the current tick, i.e. an atomic time frame in the discrete event model. Once all events have been handled, the SA reports back to the PCA that the tick has been successfully executed.

On a single platform, different subnet agents are created, configured and controlled by a platform coordination agent (PCA) 730. A platform is meant as a software environment for agents running on one computer. The number of subnet agents handled by the PCA 730 is dependent on the available computing resources. The PCA 730 receives events from the NCA 720 and relays them to all the SAs 740 residing on its platform. As soon as all SAs 740 have reported back that the tick has been executed successfully, the PCA 730 is responsible for forwarding the packets traveling from one subnet to another subnet on a different platform to the respective target PCA 730. Subsequently, it informs the NCA 720 that the platform has finished the requested task. The platform also has a connection to the database 750, where simulation results and history can be stored.

The GUI agent 710 acts as a mediator between the software agent environment and the graphical user interface. It transmits control information from the GUI to the agents and in turn receives data from the agents which can be displayed in the GUI, for example packet statistics.

The entire network simulation is controlled by the network coordination agent (NCA) 720. The NCA 720 coordinates the distribution of the subnets at the beginning of a simulation as well as the synchronization of the platforms. The NCA 720 receives its network model data from the GUI agent 710. The GUI can also trigger the beginning and determine the end of the simulation, but the NCA 720 does not depend on a GUI agent 710 to be present once it has been started. This architecture allows the distributed network simulation. In addition, the graphical user interface can be disconnected from the simulation environment and later reconnected to it even from another computer.

A scenario in which traffic is generated on a single virtual network over a certain amount of time is referred to as a session. The accurate reproduction of a session enables users to employ the invention as an evaluation framework. For instance, replaying a session using different detection methods or different deployments of the detection units allows the comparison of performance and detection efficiency of different security framework setups.

For these purposes, a distributed database 750 is utilized in which the traffic generated during a session is stored. The design of the database 750 is based on the session concept, wherein each session comprises all traffic data that occurs in a simulated scenario between a start and end time using a dedicated network model. The network model is saved in an XML file. This network file is stored and annotated with a version number based on its hash code in order to link a network uniquely to a session.

The traffic database scheme is split into two parts in order to store and load the data efficiently. The tables of the first part are created for each new session. All flow data is stored for each link and tick. A table is used to store information for each potentially infected packet on a link and is extended as more detailed information about the infection type becomes available. The payload is stored in the second part in an extra table to increase the speed when reading the data for replaying scenarios. This also prevents storing duplicate data.
The employment of a database 750 also enhances the speed of the simulation by storing the payload of each new sent packet and only sending the header data of that packet. The payload of the packet is only read from the database 750, if the data has to be processed, e.g., when a packet passes a link that is inspected by a detection unit.

In another part of the database preferably the deployment of detection units as well as their results is stored. In order to remain flexible in the use of different deployments for the same saved session session-related information and deployment data are kept separated.

The graphical user interface with advantage is a Rich Client Platform (RCP) application based on the Eclipse framework. It comprises a main network editor window grouped with a variety of different views which provide additional information pertaining to the element currently selected in the network editor. An exemplary selection of these views are:
Console: In the console view, network status information and logged events are displayed. The desired level of verbosity can be configured.
Browser: The browser serves for displaying HTML resources which were manually retrieved by executing the respective command in the network editor.
Routing Table: When a virtual network node, i.e. a client, server or router, is selected, the respective routing table is displayed. For each reachable target machine, it contains the IP addresses of the gateway, the subnet mask and the hop count.
Properties: Displays and allows editing a number of properties for the selected element. Among other information, device name and device type are displayed for nodes; for links, bandwidth, latency and maximum transfer unit (MTU) is available.
Chart: The Chart View serves as a graphical depiction of aggregated statistical data collected on the network traffic for the selected link. This data is received from the PCA's databases and updated periodically.
Sniffed Packets: Supplementing the chart view, individual packets can be displayed in a separate Sniffed Packets View. Packets are color-coded according to their protocol type and sorted by the link they were captured on. Furthermore, a summary of important information is given, such as source and destination IP address and fragmentation offset.

The user interacts with the application via context-sensitive actions. For more complex operations, the user is supported by wizards. For example, when an IRC server is drag-and dropped on the network editor, a context-menu action is dynamically created for this node which allows to execute a pre-defined IRC exploit scenario. When the user selects it, a wizard appears, describing the scenario and guiding the user through the process.

Simulation execution can be started, paused and stopped at any time. Once a scenario was run successfully, the user can start a new scenario opt to replay the same traffic with different detection units or deployments. When a scenario is not running, the user can also change the network topology by adding and deleting links and nodes.

Above the basic network model and traffic generation features of the invention as well as other aspects regarding general network simulation were described. A distinguishing feature of the invention over the prior art is the focus on network security framework and algorithm evaluation.

The invention provides a socket-based API for the deployment and evaluation of detection units. These detection units may be well-known security solutions as standard virus scanners or new tools developed in scientific research projects. Both can be incorporated as long as they adhere to a specified interface, and their performance can be compared for different traffic scenarios. The configuration of a detection unit and the required components preferably are stored in a template. In the template also pre-defined parameters or options can be set, for instance synchronous packet processing, allowing the application of countermeasures, or a processing interval for a detection algorithm.

Furthermore, when a security framework composed of several detection units is to be tested, profiles can be used to simulate attacker behavior and attack patterns. Support for various attack scenarios is provided. A first exemplary scenario comprises bot networks initiating DDoS attacks. Here, infected end device nodes, "zombies", are controlled by the bot net commander via the Internet Relay Chat application. The commander is capable of initiating different kinds of DDoS attacks like the SYN Flooding or UDP Storm. To this end, the attacker connects to an IRC communication server and sends attack commands to a chat channel all the bots are listening to. As a result, the bots execute the desired attack. A second exemplary scenario comprises worm propagation schemes, wherein the behaviour of for instance the SQL Slammer worm or the Blaster worm is realized. In general, a worm propagation scheme as well as the SIR model (Susceptible Infected Recovered) as an epidemiological model is prefreably provided by the invention. A worm propagation scheme preferably can be configured in different ways: on the one hand configuration files are provided defining the number of initial propagators and where in the network the outbreak should take place. Additionally, the spreading scheme, i.e. which IP addresses to attack and delays in between, can be set. On the other hand, the worm application model itself can either be extended or a new one can seamlessly be integrated via the socket-based application interface provided by the invention.

As part of an inventive system, the implemented detection units can be deployed on a set of links. This means that once packets containing a previously generated signature, indicating malicious content, traverse a sniffed link on which the deployed detection unit recognizes the malignant traffic, an alert is issued and the suspicious packets are filtered. Sniffed packets can additionally be displayed in a separate view.

Therefore, analogous to the traffic profiles, detection profiles can be created. Detection profiles preferably comprise one or more detection units and can be deployed on end devices, links or routers. With special advantage different deployments can be evaluated with regard to their efficiency. For this purpose an event-based approach is applied, utilizing so-called Meta Attack Events, wherein events exemplary incorporate dropped packets, infected flows, compromised machines or unavailable services. Those events are stored in a database at runtime. Events belonging to the same attack refer to a global ID to differentiate between the impacts of different attacks. The database associates those events with a time stamp in the simulation as well as a device and/or transmitted packets related to that specific event.

The inventive method has already demonstrated its value in recent research and was employed as a test framework for various network-centric security approaches. With special advantage the invention is suitable for testing cooperative detection scenarios, in which distributed detection units are provided which are capable of sharing information with each other.

The invention thus provides a Network Security Simulator, which, based on agent technology and discrete event simulation, is a highly-scalable, platform-independent network simulation tool with special features for evaluating security solutions. In particular, the plugin-based API allows security experts to write their own detection unit plug-ins and test them in an inventive system.

Traffic generation capabilities can preferably be furthermore enhanced to provide interfaces for importing data from real-life networks providing traffic data for scientific purposes. Pre-defined distribution functions can also be used to generate traffic.

A network service provider (NSP), who plans to devise a security framework in which detection devices are placed within the network in order to provide improved security features to his customers, must take into account that it is not desirable to make frequent changes or experiment with various security feature deployments in the network infrastructure of a production system.

For this reason, network operators can greatly profit from a network simulation tool in which various features of the security architectures can be tested in order to ensure maximum attack detection efficiency before the actual physical deployment. The invention allows NSPs to experiment with different network-centric security framework setups and algorithms in order to evaluate and compare intrusion detection efficiency and operational costs. In this fashion, a devised security framework can be tested in a realistic simulation before the actual detection units are physically deployed in the network.

## Claims

1. A method for simulating anomalous operation within a computer network with multiple network elements (110, 120, 130, 140, 210, 220, 230, 240, 310, 320, 330, 400) which for the purpose of data communication are interconnected, comprising the steps of
- providing for each of said network elements a corresponding data processing node (110a, 120a, 130a, 140a, 210a, 220a, 230a, 240a, 310a, 320a, 330a, 400a) representing the respective network element, wherein said data processing nodes are adapted to exchange data with each other, and
- generating data traffic by at least a subset of said data processing nodes (110a, 120a, 130a, 140a, 400a), wherein at least one (400a) of said data processing nodes generates anomalous data traffic, **characterized by** the step of analyzing data traffic by at least one detection unit (510, 520, 530, 540) for detecting anomalous data traffic, wherein each of said detection units (510, 520, 530, 540) receives information on data traffic by at least one associated data processing node (110a, 140a, 210a, 220a) via a socket-based data interface, wherein
a data session comprising the data traffic generated by all data processing nodes during a pre-defined time interval is stored in at least one database (750) and at least two different setups of detection units (510, 520, 530, 540) are provided and a stored data session is repeated for each of said setups.

2. The method of claim 1, wherein said data traffic comprises data transmitted between data processing nodes based on the TCP/IP protocol.

3. The method of claim 1 or 2, wherein data traffic is automatically generated by a data processing node depending on a pre-defined profile.

4. The method of claim 3, wherein said anomalous data traffic is generated according to a pre-defined attack pattern of a selectable type of malware.

5. The method of any one of the preceding claims, wherein multiple detection units (510, 520, 530, 540) are provided, each of which is associated with a different one of the data processing nodes (110a, 140a, 210a, 220a).

6. The method of claim 5, wherein said multiple detection units (510, 520, 530, 540) exchange data with each other.

7. The method of any one of the preceding claims, wherein at least two data processing nodes (710, 720, 730, 740) are located on different computers (610, 620, 630, 640) connected via a communication network (800).

8. The method of any one of the preceding claims, wherein the data traffic comprises data packets with header data and payload data, and wherein said header data is exchanged between data processing nodes and said payload data is stored in at least one database (750), and wherein for analyzing said stored payload data is accessed by a detection unit (510, 520, 530, 540).

9. The method of any one of the preceding claims, wherein said data processing nodes (110a, 120a, 130a, 140a, 210a, 220a, 230a, 240a, 310a, 320a, 330a, 400a) are provided as software agents.

10. A system for simulating anomalous operation within a computer network with multiple network elements (110, 120, 130, 140, 210, 220, 230, 240, 310, 320, 330, 400) which for the purpose of data communication are interconnected, comprising for each of said network elements a corresponding data processing node (110a, 120a, 130a, 140a, 210a, 220a, 230a, 240a, 310a, 320a, 330a, 400a) representing the respective network element, wherein
- said data processing nodes are adapted to exchange data with each other,
- at least a subset (110a, 120a, 130a, 140a, 400a) of said data processing nodes is adapted to generate data traffic, and
- at least one (400a) of said data processing nodes is adapted to generate anomalous data traffic, **characterized in that** at least one (110a, 140a, 210a, 220a) of said data processing nodes is provided with a socket-based data interface for exchanging data with an associated detection unit (510, 520, 530, 540), wherein said detection unit is adapted to detect anomalous data traffic by analyzing information on data traffic received from the associated data processing node, and wherein
the system comprises at least one database (750) for storing data sessions, wherein a data session comprises the data traffic generated by all data processing nodes during a pre-defined time interval, wherein the system is adapted for repeating stored data sessions for different setups of detection units (510, 520, 530, 540).

11. The system of claim 10, wherein the data processing nodes are adapted to generate data traffic which comprises data transmitted between data processing nodes based on the TCP/IP protocol.

12. The system of claim 10 or 11, wherein said subset of data processing nodes is provided with a pre-defined profile for automatically generating data traffic.

13. The system of claim 12, wherein said at least one data processing node adapted to generate anomalous data traffic is adapted to generate data traffic according to a pre-defined attack pattern of a selectable type of malware.

14. The system of any one of the preceding claims, comprising multiple detection units (510, 520, 530, 540), each of which is associated with a different one of the data processing nodes (110a, 140a, 210a, 220a).

15. The system of claim 14, wherein said multiple detection units (510, 520, 530, 540) are adapted to exchange data with each other.

16. The system of any one of the preceding claims, comprising at least two computers (610, 620, 630, 640) interconnected via a communication network (800), wherein at least two data processing nodes (710, 720, 730, 740) are located on different computers.

17. The system of any one of the preceding claims, wherein the data traffic comprises data packets with header data and payload data, the system comprises at least one database (750) for storing payload data, the data processing nodes are adapted to exchange header data, and associated detection units (510, 520, 530, 540) are adapted to retrieve payload data from said at least one database (750).

18. The system of any one of the preceding claims, wherein said data processing nodes (110a, 120a, 130a, 140a, 210a, 220a, 230a, 240a, 310a, 320a, 330a, 400a) are provided as software agents.

19. A digital storage medium, comprising electronically readable control instructions adapted to perform, when executed in at least one computer (610, 620, 630, 640), a method according to any one of claims 1 to 9.

## Patentansprüche

1. Verfahren zur Simulation eines anomalen Betriebs innerhalb eines Computernetzes mit mehreren Netzwerkelementen (110, 120, 130, 140, 210, 220, 230, 240, 310, 320, 330, 400), die zum Zwecke der Datenkommunikation miteinander verbunden sind, mit folgenden Schritten:
- Bereitstellen eines entsprechenden Datenverarbeitungsknotens (110a, 120a, 130a, 240a, 210a, 220a, 230a, 240a, 310a, 320a, 330a, 400a) für jedes der Netzwerkelemente, der das jeweilige Netzwerkelement repräsentiert, wobei die Datenverarbeitungsknoten dazu ausgebildet sind, Daten miteinander auszutauschen, und
- Erzeugen von Datenverkehr durch mindestens eine Teilmenge der Datenverarbeitungsknoten (110a, 120a, 130a, 140a, 400a), wobei mindestens einer (400a) der Datenverarbeitungsknoten anomalen Datenverkehr erzeugt, **gekennzeichnet durch** den Schritt, den Datenverkehr **durch** mindestens eine Erkennungseinheit (510, 520, 530, 540) zum Erkennen anomalen Datenverkehrs zu analysieren, wobei jede der Erkennungseinheiten (510, 520, 530, 540) Informationen über den Datenverkehr **durch** mindestens einen zugeordneten Datenverarbeitungsknoten (110a, 140a, 210a, 220a) über eine socket-basierte Datenschnittstelle empfängt, wobei
eine Datensitzung, die den von allen Datenverarbeitungsknoten während eines vordefinierten Zeitintervalls erzeugten Datenverkehr umfasst, in mindestens einer Datenbank (750) gespeichert wird und mindestens zwei verschiedene Einstellungen von Erkennungseinheiten (510, 520, 530, 540) vorgesehen sind und eine gespeicherte Datensitzung für jede der Einstellungen wiederholt wird.

2. Verfahren nach Anspruch 1, wobei der Datenverkehr Daten umfasst, die zwischen Datenverarbeitungsknoten basierend auf dem TCP/IP-Protokoll übertragen werden.

3. Verfahren nach Anspruch 1 oder 2, wobei Datenverkehr in Abhängigkeit von einem vordefinierten Profil automatisch von einem Datenverarbeitungsknoten erzeugt wird.

4. Verfahren nach Anspruch 3, wobei der anomale Datenverkehr gemäß einem vordefinierten Angriffsmuster eines auswählbaren Typs von Malware erzeugt wird.

5. Verfahren nach einem der vorhergehenden Ansprüche, wobei mehrere Erkennungseinheiten (510, 520, 530, 540) vorgesehen sind, die jeweils einem verschiedenen der Datenverarbeitungsknoten (110a, 140a, 210a, 220a) zugeordnet sind.

6. Verfahren nach Anspruch 5, wobei die mehreren Erkennungseinheiten (510, 520, 530, 540) Daten miteinander austauschen.

7. Verfahren nach einem der vorhergehenden Ansprüche, wobei sich mindestens zwei Datenverarbeitungsknoten (710, 720, 730, 740) auf verschiedenen Computern (610, 620, 630, 640) befinden, die über ein Kommunikationsnetzwerk (800) verbunden sind.

8. Verfahren nach einem der vorhergehenden Ansprüche, wobei der Datenverkehr Datenpakete mit Kopfdaten und Nutzdaten umfasst, und wobei die Kopfdaten zwischen Datenverarbeitungsknoten ausgetauscht werden und die Nutzdaten in mindestens einer Datenbank (750) gespeichert werden, und wobei zum Analysieren durch eine Erkennungseinheit (510, 520, 530, 540) auf die gespeicherten Nutzdaten zugegriffen wird.

9. Verfahren nach einem der vorhergehenden Ansprüche, wobei die Datenverarbeitungsknoten (110a, 120a, 130a, 140a, 210a, 220a, 230a, 240a, 310a, 320a, 330a, 400a) als Software-Agenten bereitgestellt werden.

10. System zur Simulation eines anomalen Betriebs innerhalb eines Computernetzes mit mehreren Netzwerkelementen (110, 120, 130, 140, 210, 220, 230, 240, 310, 320, 330, 400), die zum Zweck der Datenkommunikation miteinander verbunden sind, welches für jedes der Netzwerkelemente einen entsprechenden Datenverarbeitungsknoten (110a, 120a, 130a, 140a, 210a, 220a, 230a, 240a, 310a, 320a, 330a, 400a) umfasst, der das jeweilige Netzwerkelement repräsentiert, wobei
- die Datenverarbeitungsknoten dazu ausgebildet sind, Daten miteinander auszutauschen,
- mindestens eine Teilmenge (110a, 120a, 130a, 140a, 400a) der Datenverarbeitungsknoten dazu ausgebildet ist, Datenverkehr zu erzeugen, und
- mindestens einer (400a) der Datenverarbeitungsknoten dazu ausgebildet ist, anomalen Datenverkehr zu erzeugen, **dadurch gekennzeichnet, dass** mindestens einer (110a, 140a, 210a, 220a) der Datenverarbeitungsknoten mit einer socket-basierten Datenschnittstelle zum Datenaustausch mit einer zugeordneten Erkennungseinheit (510, 520, 530, 540) ausgestattet ist, wobei die Erkennungseinheit dazu ausgebildet ist, anomalen Datenverkehr zu erkennen, indem Informationen über den von dem zugeordneten Datenverarbeitungsknoten empfangenen Datenverkehr analysiert werden, und wobei
das System mindestens eine Datenbank (750) zum Speichern von Datensitzungen aufweist, wobei eine Datensitzung den Datenverkehr umfasst, der von allen Datenverarbeitungsknoten während eines vordefinierten Zeitintervalls erzeugt wird, wobei das System dazu ausgebildet ist, gespeicherte Datensitzungen für verschiedene Einstellungen der Erkennungseinheiten (510, 520, 530, 540) zu wiederholen.

11. System nach Anspruch 10, wobei die Datenverarbeitungsknoten dazu ausgebildet sind, Datenverkehr zu erzeugen, der Daten umfasst, die zwischen Datenverarbeitungsknoten basierend auf dem TCP/IP-Protokoll übertragen werden.

12. System nach Anspruch 10 oder 11, wobei die Teilmenge von Datenverarbeitungsknoten mit einem vordefinierten Profil zur automatischen Erzeugung von Datenverkehr ausgestattet ist.

13. System nach Anspruch 12, wobei der mindestens eine Datenverarbeitungsknoten, der dazu ausgebildet ist anomalen Datenverkehr zu erzeugen, dazu eingerichtet ist, Datenverkehr gemäß einem vordefinierten Angriffsmuster eines auswählbaren Typs von Malware zu erzeugen.

14. System nach einem der vorhergehenden Ansprüche, welches mehrere Erkennungseinheiten (510, 520, 530, 540) umfasst, die jeweils einem verschiedenen der Datenverarbeitungsknoten (110a, 140a, 210a, 220a) zugeordnet sind.

15. System nach Anspruch 14, wobei die mehreren Erkennungseinheiten (510, 520, 530, 540) dazu ausgebildet sind, Daten miteinander auszutauschen.

16. System nach einem der vorhergehenden Ansprüche, mit mindestens zwei Computern (610, 620, 630, 640), die über ein Kommunikationsnetz (800) miteinander verbunden sind, wobei sich mindestens zwei der Datenverarbeitungsknoten (710, 720, 730, 740) auf verschiedenen Computern befinden.

17. System nach einem der vorangehenden Ansprüche, wobei der Datenverkehr Datenpakete mit Kopfdaten und Nutzdaten umfasst, wobei das System mindestens eine Datenbank (750) zum Speichern von Nutzdaten umfasst, wobei die Datenverarbeitungsknoten dazu ausgebildet sind, Kopfdaten auszutauschen, und wobei zugeordnete Erkennungseinheiten (510, 520, 530, 540) dazu ausgebildet sind, Nutzdaten aus der mindestens einen Datenbank (750) abzurufen.

18. System nach einem der vorhergehenden Ansprüche, wobei die Datenverarbeitungsknoten (110a, 120a, 130a, 140a, 210a, 220a, 230a, 240a, 310a, 320a, 330a, 400a) als Software-Agenten vorgesehen sind.

19. Digitales Speichermedium mit elektronisch lesbaren Steuerbefehlen, die bei der Ausführung in mindestens einem Computer (610, 620, 630, 640) dazu ausgebildet sind, ein Verfahren nach einem der Ansprüche 1 bis 9 auszuführen.

## Revendications

1. Procédé pour simuler un fonctionnement anormal à l'intérieur d'un réseau informatique avec de multiples éléments de réseau (110, 120, 130, 140, 210, 220, 230, 240, 310, 320, 330, 400) qui, aux fins d'une communication de données, sont interconnectés, comprenant les étapes consistant à :
- fournir, pour chacun desdits éléments de réseau, un noeud de traitement de données correspondant (110a, 120a, 130a, 140a, 210a, 220a, 230a, 240a, 310a, 320a, 330a, 400a) représentant l'élément de réseau respectif, où lesdits noeuds de traitement de données sont adaptés pour échanger des données les uns avec les autres, et
- générer un trafic de données par au moins un sous-ensemble desdits noeuds de traitement de données (110a, 120a, 130a, 140a, 400a), où au moins un (400a) desdits noeuds de traitement de données génère un trafic de données anormal, **caractérisé par** l'étape consistant à analyser un trafic de données par au moins une unité de détection (510, 520, 530, 540) pour détecter un trafic de données anormal, où chacune desdites unités de détection (510, 520, 530, 540) reçoit des informations sur un trafic de données par au moins un noeud de traitement de données associé (110a, 140a, 210a, 220a) via une interface de données à base de socket, où une session de données comprenant le trafic de données généré par tous les noeuds de traitement de données pendant un intervalle de temps prédéfini est stockée dans au moins une base de données (750) et au moins deux réglages différents d'unités de détection (510, 520, 530, 540) sont fournis et une session de données stockée est répétée pour chacun desdits réglages.

2. Procédé selon la revendication 1, dans lequel ledit trafic de données comprend des données transmises entre des noeuds de traitement de données sur la base du protocole TCP/IP.

3. Procédé selon la revendication 1 ou 2, dans lequel un trafic de données est généré automatiquement par un noeud de traitement de données en fonction d'un profil prédéfini.

4. Procédé selon la revendication 3, dans lequel ledit trafic de données anormal est généré selon un modèle d'attaque prédéfini d'un type sélectionnable de maliciel.

5. Procédé selon l'une quelconque des revendications précédentes, dans lequel de multiples unités de détection (510, 520, 530, 540) sont fournies, dont chacune est associée à un noeud différent des noeuds de traitement de données (110a, 140a, 210a, 220a).

6. Procédé selon la revendication 5, dans lequel lesdites multiples unités de détection (510, 520, 530, 540) échangent des données les unes avec les autres.

7. Procédé selon l'une quelconque des revendications précédentes, dans lequel au moins deux noeuds de traitement de données (710, 720, 730, 740) sont situés sur des ordinateurs différents (610, 620, 630, 640) connectés via un réseau de communication (800).

8. Procédé selon l'une quelconque des revendications précédentes, dans lequel le trafic de données comprend des paquets de données avec des données d'en-tête et des données de charge utile, et dans lequel lesdites données d'en-tête sont échangées entre des noeuds de traitement de données et lesdites données de charge utile sont stockées dans au moins une base de données (750), et dans lequel, pour l'analyse, lesdites données de charge utile stockées font l'objet d'un accès par une unité de détection (510, 520, 530, 540).

9. Procédé selon l'une quelconque des revendications précédentes, dans lequel lesdits noeuds de traitement de données (110a, 120a, 130a, 140a, 210a, 220a, 230a, 240a, 310a, 320a, 330a, 400a) sont fournis comme des agents logiciels.

10. Système pour simuler un fonctionnement anormal à l'intérieur d'un réseau informatique avec de multiples éléments de réseau (110, 120, 130, 140, 210, 220, 230, 240, 310, 320, 330, 400) qui, aux fins d'une communication de données, sont interconnectés, comprenant, pour chacun desdits éléments de réseau, un noeud de traitement de données correspondant (110a, 120a, 130a, 140a, 210a, 220a, 230a, 240a, 310a, 320a, 330a, 400a) représentant l'élément de réseau respectif, dans lequel :
- lesdits noeuds de traitement de données sont adaptés pour échanger des données les uns avec les autres,
- au moins un sous-ensemble (110a, 120a, 130a, 140a, 400a) desdits noeuds de traitement de données est adapté pour générer un trafic de données, et
- au moins un (400a) desdits noeuds de traitement de données est adapté pour générer un trafic de données anormal, **caractérisé en ce qu'**au moins un (110a, 140a, 210a, 220a) desdits noeuds de traitement de données est pourvu d'une interface de données à base de socket pour échanger des données avec une unité de détection associée (510, 520, 530, 540), où ladite unité de détection est adaptée pour détecter un trafic de données anormal en analysant des informations sur un trafic de données reçu en provenance du noeud de traitement de données associé, et où
le système comprend au moins une base de données (750) pour stocker des sessions de données, où une session de données comprend le trafic de données généré par tous les noeuds de traitement de données pendant un intervalle de temps prédéfini, où le système est adapté pour répéter des sessions de données stockées pour différents réglages d'unités de détection (510, 520, 530, 540).

11. Système selon la revendication 10, dans lequel les noeuds de traitement de données sont adaptés pour générer un trafic de données qui comprend des données transmises entre des noeuds de traitement de données sur la base du protocole TCP/IP.

12. Système selon la revendication 10 ou 11, dans lequel ledit sous-ensemble de noeuds de traitement de données est pourvu d'un profil prédéfini pour générer automatiquement un trafic de données.

13. Système selon la revendication 12, dans lequel ledit au moins un noeud de traitement de données adapté pour générer un trafic de données anormal est adapté pour générer un trafic de données selon un modèle d'attaque prédéfini d'un type sélectionnable de maliciel.

14. Système selon l'une quelconque des revendications précédentes, comprenant de multiples unités de détection (510, 520, 530, 540), dont chacune est associée à un noeud différent des noeuds de traitement de données (110a, 140a, 210a, 220a).

15. Système selon la revendication 14, dans lequel lesdites multiples unités de détection (510, 520, 530, 540) sont adaptées pour échanger des données les unes avec les autres.

16. Système selon l'une quelconque des revendications précédentes, comprenant au moins deux ordinateurs (610, 620, 630, 640) interconnectés via un réseau de communication (800), dans lequel au moins deux noeuds de traitement de données (710, 720, 730, 740) sont situés sur des ordinateurs différents.

17. Système selon l'une quelconque des revendications précédentes, dans lequel le trafic de données comprend des paquets de données avec des données d'en-tête et des données de charge utile, le système comprenant au moins une base de données (750) pour stocker des données de charge utile, les noeuds de traitement de données sont adaptés pour échanger des données d'en-tête, et des unités de détection associées (510, 520, 530, 540) sont adaptées pour récupérer des données de charge utile à partir de ladite au moins une base de données (750).

18. Système selon l'une quelconque des revendications précédentes, dans lequel lesdits noeuds de traitement de données (110a, 120a, 130a, 140a, 210a, 220a, 230a, 240a, 310a, 320a, 330a, 400a) sont fournis comme des agents logiciels.

19. Support de stockage numérique, comprenant des instructions de commande lisibles électroniquement adaptées pour effectuer, lorsqu'elles sont exécutées dans au moins un ordinateur (610, 620, 630, 640), un procédé selon l'une quelconque des revendications 1 à 9.
